# EUROPÄISCHE PATENTANMELDUNG

(11) **EP 4 654 010 A1**
(43) Veröffentlichungstag der Anmeldung: **26.11.2025**
(21) Anmeldenummer: 24177531.1
(22) Anmeldetag: 23.05.2024
(51) Int. Cl.: G06F 9/455, G06F 21/51, G06F 21/64, G06F 8/35

(54) **COMPUTERIMPLEMENTIERTES VERFAHREN ZUM ERSTELLEN EINES RESTMODELLS FÜR EIN SIMULATIONSSYSTEM**

(71) Anmelder: dSPACE GmbH, 33102 Paderborn (DE)
(72) Erfinder: Menne, Benedikt, 33102 Paderborn (DE); Reim, Kevin, 33102 Paderborn (DE); Boos, Clemens, 33102 Paderborn (DE)

(57) **Zusammenfassung**

Erfindungsgemäß wird ein computerimplementiertes Verfahren zum Erstellen einer Functional Mock-up Unit, FMU, nach dem FMI-Standard, mit folgenden Verfahrensschritten bereitgestellt: Erstellen einer V-ECU, Erstellen von Integritätsprüfungs-Code und Exportieren der V-ECU in eine FMU unter Hinzufügung des Integritätsprüfungs-Codes, so dass die erzeugte FMU bei jedem Start auf einem FMI-Simulator auf der Grundlage des Integritätsprüfungs-Codes eine Integritätsprüfung durchführt, im Rahmen derer geprüft wird, ob die Version der FMU gegenüber der durch das Exportieren der V-ECU erzeugten Version der FMU unverändert ist. Auf diese Weise wird eine einfache Möglichkeit bereitgestellt, die Integrität einer FMU zu prüfen.

## Beschreibung

Die Erfindung betrifft ein computerimplementiertes Verfahren zum Erstellen einer Functional Mock-up Unit (FMU) nach dem FMI-Standard, mit den Verfahrensschritten Erstellen einer V-ECU und Exportieren der V-ECU in eine FMU.

Eine Software, die in einer Simulation ein reales Steuergerät oder Teile davon nachbildet, wird als V-ECU (virtuelles Steuergerät) bezeichnet. Diese V-ECUs können in ihrer Ausgestaltung stark variieren - sie reichen von sehr simplen Ausführungen bis hin zu umfassenden Versionen, die sämtliche Elemente eines echten Steuergeräts abbilden. In ihrer einfachsten Ausgestaltung verfügt eine V-ECU über lediglich eine Komponente pro Funktion. Eine komplexere V-ECU-Ausführung hingegen beinhaltet mehrere miteinander verbundene Softwarekomponenten, die etwa die gesamte Funktionsweise eines Steuergeräts nachahmen können. Zum realitätsnahen Simulieren im Automobilsektor zählt beispielsweise auch die Integration der AUTOSAR Runtime Environment (RTE) und eines Betriebssystems, das realistisches Task Scheduling ermöglicht. Bei Bedarf lassen sich spezifische Softwarekomponenten ergänzen, um Elemente wie die Buskommunikation oder NVRAM zu emulieren. Wird der tatsächliche Basis-Software-Code, der auch im Serienprodukt Einsatz findet, hinzugefügt, nähert sich die V-ECU weiter der Realität an. Somit umfasst eine V-ECU sowohl Anwendungs- als auch Basis-Softwarekomponenten und erreicht Funktionalitäten, die denen echter Steuergeräte nahekommen. Insbesondere während computerbasierter Simulationen wird sie für Validierungszwecke genutzt.

Die Nutzung einer V-ECU erübrigt den Einsatz realer Steuergeräte-Hardware, was die Simulation beschleunigt und Analysen des simulierten Steuergeräts zeit- und kosteneffizient macht. Durch Software-in-the-Loop-Tests (SIL-Tests) können in computerbasierten Simulationen Softwarefunktionen, einzelne V-ECUs oder ganze Netzwerke von V-ECUs simuliert und geprüft werden.

Der Softwareentwicklungsprozess für klassische Anwendungen im Automobilbereich, wie für Antriebsstrang-, Bremssysteme, bis hin zu Anwendungen für den elektrischen Antrieb und Funktionen für autonomes Fahren, kann mittels SIL-Tests durch virtuelles Testen und Validieren erheblich beschleunigt werden. Ein Device Under Test (DUT) lässt sich problemlos auf einem Computer simulieren, kann mit physikalisch basierten Modellen verbunden werden, und die dabei verwendeten Testskripte lassen sich später einfach in Hardware-in-the-Loop (HIL)-Systemen wiederverwenden.

Für die Durchführung von SIL-Tests werden typischerweise komplexe Simulationssysteme aufgebaut. Diese bestehen mindestens aus einem Zielmodell, dem Device-under-Test (DUT) oder System-under-Test, sowie aus Umgebungs- und Restbusmodellen, die für eine aussagekräftige Simulation unerlässlich sind. Bei der Entwicklung solcher Simulationssysteme arbeiten oft unterschiedliche Teams, die nicht selten in verschiedenen Unternehmen ansässig sind, was spezielle Anforderungen an die Wahrung der Vertraulichkeit stellt.

Das Functional Mock-up Interface (FMI) ist eine offene Standard-Schnittstelle, die entwickelt wurde, um den Austausch und die Kopplung von dynamischen Modellen verschiedener Simulationswerkzeuge zu erleichtern. Diese Schnittstelle ermöglicht es, Modelle als Functional Mock-up Units (FMUs) zu verpacken, die dann zwischen verschiedenen Softwareanwendungen ausgetauscht oder gemeinsam genutzt werden können. Eine FMU ist im Wesentlichen ein Container, der ein dynamisches Modell zusammen mit allen für dessen Simulation erforderlichen Daten und Funktionen enthält.

FMI unterstützt sowohl die Co-Simulation als auch den Model Exchange und Scheduled Execution. Bei der Co-Simulation interagieren die FMUs während der Simulation miteinander, wobei jede FMU ihre eigenen internen Zustände verwaltet und mit anderen FMUs über Eingangs- und Ausgangsvariablen kommuniziert. Der Model Exchange hingegen ermöglicht es, dass eine FMU von einem anderen Simulator gesteuert wird, der dann die numerische Lösung des Modells übernimmt. Bei Scheduled Execution wird die Ausführung der Modelle von einem externen Zeitplaner (Scheduler) gesteuert.

Der Standard wird von der FMI-Entwicklungsgemeinschaft verwaltet und ist darauf ausgerichtet, die Zusammenarbeit in der Entwicklung komplexer Systeme zu verbessern, indem er eine gemeinsame Basis für den Austausch von Modellen bietet. Dies ist besonders nützlich in Industrien, in denen verschiedene Disziplinen und Softwarewerkzeuge zusammenkommen, wie in der Automobilindustrie, der Luft- und Raumfahrt, der Energieerzeugung und vielen anderen Bereichen der Ingenieurwissenschaften.

Durch die Nutzung von FMI können Entwickler Modelle aus verschiedenen Quellen integrieren, ohne auf spezifische Simulationssoftware oder -plattformen beschränkt zu sein, was die Wiederverwendbarkeit von Modellen fördert und die Entwicklungskosten senkt.

Die FMI-Simulationsartefakte werden in einer sogenannten FMU (Functional Mock-up Unit) zusammengeführt. Jedes FMU-Modell wird dabei typischerweise als zip-Datei mit der Erweiterung ".fmu" zur Verfügung gestellt. Es liegen zwei Arten von FMUs vor: Zum einen sogenannte Source-Code-FMUs, bei denen das zip-Archiv Quellcode in C/C++ enthält, der vor einer Simulation kompiliert werden muss. Zum anderen existieren sogenannte Binary-FMUs, in denen der Quelltext bereits vorkompiliert als dll-Datei oder so-Datei vorliegt. Da die FMI-Schnittstelle standardisiert ist, existieren eine Vielzahl an FMU-Importer, welche FMUs simulieren können. Das Unternehmen dSPACE bietet hier unter anderem VEOS^{®} als FMU-kompatiblen Importer/Simulator und SystemDesk als Werkzeug zur Erzeugung von FMUs an.

Virtuelle ECUs werden häufig innerhalb einer FMU bereitgestellt, damit der Hersteller und die ausführende Instanz für virtuelle Testszenarien nicht von einem Simulator eines einzelnen Unternehmens abhängig sind. Für die Erzeugung der virtuellen ECU als FMU ist in der Praxis z. B. das Softwareprodukt SystemDesk^{®} bekannt, mit dem ein Anwender eine virtuelle ECU erzeugen und anderen Anwendern für Tests bereitstellen oder eigene Tests durchführen kann.

Im Regelfall werden solche virtuellen ECUs von Zulieferern oder bei OEMs nicht von den Abteilungen erstellt, in denen sie letztlich für Tests verwendet werden, sondern von anderen Abteilungen. Somit hat der Autor einer solchen virtuellen ECU ein hohes Interesse daran, die Integrität seiner FMU in der späteren Wertschöpfungskette sicherzustellen. Hierbei hat er weder Einfluss auf den verwendeten Workflow, noch auf die eingesetzten Tools, also konkret den Importer/Simulator, in dem die FMU simuliert wird, und natürlich die FMU selbst, welche während dieses Workflows manipuliert werden kann. Es wäre also möglich, die FMU mit einem handelsüblichen zip-Tool zu öffnen und zu verändern. In einem solchen Fall wäre die zugelieferte FMU nicht mehr integer und der entsprechend nachfolgende Test nicht aussagekräftig.

Die Erstellung einer Functional Mock-up Unit nach dem FMI-Standard folgt einem mehrschrittigen Prozess, der darauf abzielt, ein Modell so zu verpacken, dass es in verschiedenen Simulationsumgebungen wiederverwendet werden kann. Zunächst wird das dynamische Modell unter Verwendung einer unterstützten Modellierungssprache oder Software entwickelt. Dies kann in einer Vielzahl von Tools erfolgen, die für unterschiedliche Anwendungsdomänen spezifisch sein können. Nach der Entwicklung des Modells wird es für den Export vorbereitet. Dies beinhaltet die Definition von Ein- und Ausgangsvariablen, Parametern und gegebenenfalls von Ereignissen, die für die Interaktion mit dem Modell innerhalb der FMU notwendig sind. Die spezifischen Vorbereitungsschritte können je nach verwendetem Werkzeug variieren. Unter Verwendung der Exportfunktion des Entwicklungswerkzeugs wird das Modell dann als FMU exportiert. Diese Funktion verpackt das Modell zusammen mit allen benötigten Ressourcen (wie z.B. Bibliotheken, externen Dateien, Skripten) und Informationen (wie z.B. Metadaten zur Beschreibung der FMU und ihrer Variablen) in einer einzigen zip-Datei, die die Dateiendung ".fmu" erhält. Bei diesem Schritt ist auch maßgeblich, ob die FMU für Co-Simulation, Model Exchange und/oder Scheduled Execution ausgelegt wird. Co-Simulation-FMUs z. B. enthalten zusätzlich zum Modell auch einen eigenen Solver, während Model Exchange-FMUs für die Nutzung mit dem Solver des aufrufenden Simulators gedacht sind. Nach dem Export kann die FMU in einer Simulationsumgebung, die FMI unterstützt, geladen und konfiguriert werden. In dieser Phase können Anwender die FMU mit anderen Modellen oder FMUs verbinden und Simulationsexperimente durchführen. Nach der Validierung kann die FMU für verschiedene Zwecke verwendet oder an andere Nutzer weitergegeben werden, die sie in ihren eigenen Simulationsumgebungen nutzen möchten. Da FMUs standardisiert sind, können sie auf verschiedenen Simulationsplattformen eingesetzt werden, was die Wiederverwendung und den Austausch von Modellen erheblich erleichtert.

Es ist die Aufgabe der Erfindung, eine einfache Möglichkeit bereitzustellen, die Integrität einer FMU zu prüfen.

Diese Aufgabe wird durch den Gegenstand des Patentanspruchs 1 gelöst. Bevorzugte Weiterbildungen finden sich in den Unteransprüchen.

Erfindungsgemäß wird somit ein computerimplementiertes Verfahren zum Erstellen einer Functional Mock-up Unit (FMU) nach dem FMI-Standard bereitgestellt, das die folgenden Verfahrensschritte aufweist:
Erstellen einer V-ECU,
Erstellen von Integritätsprüfungs-Code und
Exportieren der V-ECU in eine FMU unter Hinzufügung des Integritätsprüfungs-Codes, so dass die erzeugte FMU bei jedem Start auf einem FMI-Simulator auf der Grundlage des Integritätsprüfungs-Codes eine Integritätsprüfung durchführt, im Rahmen derer geprüft wird, ob die Version der FMU gegenüber der durch das Exportieren der V-ECU erzeugten Version der FMU unverändert ist.

Virtuelle Steuergeräte (V-ECUs), die als Functional Mock-up Units konzipiert sind, werden häufig von Zulieferern an andere Zulieferer oder OEMs weitergegeben. Um die Integrität dieser FMUs im gesamten Vertriebs- und Nutzungsprozess zu gewährleisten, wird erfindungsgemäß ein Integritätsprüfungsalgorithmus direkt in die FMU integriert. Dies ermöglicht es dem ursprünglichen Hersteller, die Authentizität und Unveränderlichkeit der FMU zu überwachen, ohne auf externe Systeme oder die Kenntnis spezifischer Anwendungen angewiesen zu sein. Der entscheidende Vorteil dieses Verfahrens liegt darin, dass die Integrität des Simulationsartefakts unter jeglichen Bedingungen, unabhängig vom verwendeten FMU-Importer oder Simulator, sichergestellt wird. Somit können Zulieferer die Echtheit ihrer Simulationstools verlässlich nachweisen, ohne die Kontrolle über die nachgelagerten Prozesse zu benötigen oder diese direkt beeinflussen zu müssen. Dies steigert die Sicherheit und Vertrauenswürdigkeit der virtuellen Komponenten in komplexen Lieferketten der Automobilindustrie.

Grundsätzlich kann der Integritätsprüfungs-Code zeitlich unbegrenzt gültig sein. Gemäß einer bevorzugten Weiterbildung der Erfindung umfasst der Integritätsprüfungs-Code jedoch einen Gültigkeitszeitraum, wobei die Integritätsprüfung so ausgestaltet ist, dass auch geprüft wird, ob die Nutzung der FMU im Gültigkeitszeitraum liegt. Diese Ausführungsform zur Integritätsprüfung bietet eine Möglichkeit, die Sicherheit und Zuverlässigkeit von Functional Mock-up Units (FMUs) weiter zu erhöhen. Im Kern dieses Verfahrens steht der Integritätsprüfungs-Code, der grundsätzlich zeitlich unbegrenzt gültig sein könnte. Eine wesentliche Erweiterung dieses Ansatzes besteht jedoch darin, dass der Code auch einen spezifischen Gültigkeitszeitraum beinhalten kann. Diese Funktion ist besonders vorteilhaft, da sie es ermöglicht, nicht nur die Unversehrtheit der Daten zu verifizieren, sondern auch sicherzustellen, dass die Nutzung der FMU innerhalb eines festgelegten Zeitraums erfolgt. Diese zeitliche Begrenzung der Gültigkeit trägt dazu bei, die Verwendung der FMU auf autorisierte und zeitlich definierte Szenarien zu beschränken, was die Kontrolle über die Verbreitung und Anwendung der FMU erhöht. Durch die Kombination von Integritätsprüfung und zeitlicher Validierung bietet das Verfahren eine robuste Lösung, um die Integrität und die geregelte Nutzung technologischer Simulationswerkzeuge in verschiedenen Anwendungsbereichen effektiv zu gewährleisten.

Zusätzlich oder alternativ dazu ist gemäß einer bevorzugten Weiterbildung der Erfindung vorgesehen, dass der Integritätsprüfungs-Code eine Nutzerkennung umfasst und die Integritätsprüfung so ausgestaltet ist, dass auch geprüft wird, ob die Nutzung der FMU durch einen Nutzer mit einer solchen Nutzerkennung erfolgt, die der in dem Integritätsprüfungs-Code enthaltenen Nutzerkennung entspricht. Diese Ausführungsform der Erfindung bietet eine zusätzliche Sicherheitsebene für die Verwendung von Functional Mock-up Units (FMUs) durch die Integration einer Nutzerkennung in den Integritätsprüfungs-Code. Dieser Ansatz erlaubt es nicht nur, die Integrität der FMU zu überprüfen, sondern auch sicherzustellen, dass die Nutzung ausschließlich durch autorisierte Benutzer erfolgt. Der Integritätsprüfungs-Code prüft, ob die Identität des Nutzers mit der im Code hinterlegten Nutzerkennung übereinstimmt. Dies ist besonders vorteilhaft in Umgebungen, in denen der Zugriff auf die FMU streng kontrolliert werden muss, wie etwa in sicherheitskritischen Anwendungen in der Automobilindustrie. Durch die Einschränkung der Nutzung auf verifizierte Nutzer wird das Risiko unbefugter Zugriffe signifikant reduziert und die Zuverlässigkeit der Daten, die in simulationsbasierten Tests und Analysen verwendet werden, wesentlich erhöht. Dies trägt dazu bei, die allgemeine Sicherheit und Integrität der technischen Systeme, die diese FMUs einsetzen, zu verbessern und bietet einen klaren Vorteil im Hinblick auf Compliance und Betriebssicherheit.

Das Exportieren der V-ECU in die FMU kann grundsätzlich auf unterschiedliche Weisen erfolgen. Gemäß einer bevorzugten Weiterbildung der Erfindung erfolgt das Exportieren der V-ECU in die FMU jedoch als ausführbare Binary-Datei, wobei eine Berechnung eines Hash-Werts auf Basis wenigstens eines Teils der Speichersegmente der Binary-Datei erfolgt und der berechnete Hash-Wert in der FMU abgelegt wird. Vorzugsweise erfolgt dabei eine Berechnung des Hash-Werts auf Basis aller Speichersegmente der Binary-Datei.

Ein Hash-Wert ist eine Art digitaler Fingerabdruck einer Datei oder Datenmenge, der durch einen mathematischen Algorithmus erzeugt wird, bekannt als Hash-Funktion. Diese Funktion nimmt Eingabedaten beliebiger Größe und erzeugt daraus einen festen, kurzen und einzigartigen Datenblock, den Hash-Wert. Dieser Prozess ist so konzipiert, dass selbst kleinste Änderungen in den Eingabedaten zu einem vollständig unterschiedlichen Hash-Wert führen. Die Erstellung eines Hash-Wertes beginnt mit der Anwendung der Hash-Funktion auf die Daten, hier vorzugsweise auf die Speichersegmente einer ausführbaren Binary-Datei. Wichtige Eigenschaften einer guten Hash-Funktion sind die Schnelligkeit der Berechnung, die Minimierung von Kollisionen (d. h., zwei unterschiedliche Datenmengen erzeugen den gleichen Hash-Wert), und die Einweg-Eigenschaft, bei der die ursprünglichen Daten nicht aus dem Hash-Wert rekonstruiert werden können. Indem der Hash-Wert einer Datei bei ihrer Erstellung berechnet und gespeichert wird, kann jederzeit überprüft werden, ob die Datei seitdem verändert wurde. Dazu wird der Hash-Wert der aktuellen Version der Datei berechnet und mit dem ursprünglich gespeicherten Wert verglichen. Unterscheiden sich die Hash-Werte, wurde die Datei verändert.

Ein wesentliches Merkmal des vorliegenden Ansatzes ist also die Berechnung eines Hash-Werts, der auf mindestens einem Teil der Speichersegmente der Binary-Datei basiert, wobei idealerweise ein Hash-Wert aus allen Speichersegmenten generiert wird. Dieser Hash-Wert wird anschließend in der FMU gespeichert. Die Verwendung eines Hash-Werts bietet dabei zahlreiche Vorteile. Zunächst einmal stellt sie eine robuste Methode zur Gewährleistung der Integrität der Binary-Datei dar. Sobald der Hash-Wert generiert und in der FMU gespeichert ist, kann bei jeder Verwendung der FMU geprüft werden, ob die Binary-Datei seit dem Zeitpunkt ihrer Erstellung verändert wurde. Jede Modifikation an der Datei würde zu einem unterschiedlichen Hash-Wert führen, wodurch Manipulationen sofort erkennbar wären. Diese Prüfung erhöht die Sicherheit erheblich, da sie sicherstellt, dass die FMU nur mit der authentischen, unveränderten Version der V-ECU arbeitet. Dieser Ansatz ist besonders wichtig in Bereichen, in denen Genauigkeit und Zuverlässigkeit der Daten entscheidend sind, wie beispielsweise bei sicherheitskritischen Anwendungen, z. B. in der Automobilindustrie. Durch die Sicherstellung der Integrität der Binary-Datei bietet das Verfahren eine effektive Möglichkeit, die Glaubwürdigkeit und Vertrauenswürdigkeit der Simulationsresultate zu erhöhen.

Grundsätzlich kann der berechnete Hash-Wert auf unterschiedliche Weisen abgelegt werden. Gemäß einer bevorzugten Weiterbildung der Erfindung wird der berechnete Hash-Wert jedoch in einem separaten Speichersegment der FMU abgelegt. Die Speicherung des berechneten Hash-Wertes in einem separaten Speichersegment der Functional Mock-up Unit (FMU) stellt eine effektive Möglichkeit zur Sicherung der Integrität der FMU dar. Diese Ausgestaltung bietet den Vorteil, dass der Hash-Wert physisch von den Daten getrennt ist, auf die er sich bezieht. Dadurch wird die Sicherheit erhöht, da jede unautorisierte Änderung an den Daten oder am Hash-Wert selbst leichter erkannt werden kann. Indem der Hash-Wert in einem eigenen Speichersegment abgelegt wird, bleibt er auch bei Modifikationen an anderen Teilen der FMU unberührt. Dies ermöglicht eine zuverlässige Verifizierung der Daten zu jedem Zeitpunkt, da der ursprüngliche Zustand der Daten durch den Vergleich des aktuellen Hash-Wertes mit dem gespeicherten Wert im separaten Segment festgestellt werden kann. Dieser Ansatz unterstützt somit die Glaubwürdigkeit und Vertrauenswürdigkeit der FMU, indem er sicherstellt, dass die Nutzer stets mit den authentischen und unveränderten Daten arbeiten. Die getrennte Speicherung des Hash-Wertes schafft eine zusätzliche Sicherheitsbarriere gegen Manipulationen und verbessert so die allgemeine Sicherheit der Anwendungsumgebungen, in denen die FMUs eingesetzt werden.

In diesem Zusammenhang ist es weiterhin bevorzugt, dass die Integritätsprüfung so ausgestaltet wird, dass eine Berechnung des Hash-Werts auf Basis des bei der Erstellung der FMU verwendeten Teils der Speichersegmente der Binary-Datei erfolgt und der damit berechnete Hash-Wert mit dem in der FMU bei der Erstellung der FMU abgelegten Hash-Wert verglichen wird. Diese bevorzugte Ausgestaltung der Integritätsprüfung bei Functional Mock-up Units zielt darauf ab, eine hohe Sicherheitsstufe zu gewährleisten, indem der Hash-Wert auf Basis der spezifischen Teile der Speichersegmente der Binary-Datei berechnet wird, die bei der Erstellung der FMU verwendet wurden. Dieser berechnete Hash-Wert wird dann mit dem Hash-Wert verglichen, der zum Zeitpunkt der Erstellung der FMU in ihr abgelegt wurde. Dieser Ansatz bietet den Vorteil, dass er eine sehr genaue Überprüfung der Datenintegrität ermöglicht. Da der Hash-Wert aus genau den Teilen der Binary-Datei generiert wird, die ursprünglich für die Erstellung der FMU verwendet wurden, stellt der Vergleich mit dem ursprünglich gespeicherten Hash-Wert sicher, dass diese kritischen Komponenten der FMU seit ihrer Erstellung unverändert geblieben sind. Sollten sich die aktuellen und gespeicherten Hash-Werte unterscheiden, deutet dies auf eine Veränderung hin, was eine sofortige Untersuchung und mögliche Maßnahmen zur Behebung des Problems nach sich zieht. Dieses Verfahren erhöht nicht nur die Sicherheit der FMU durch die frühzeitige Erkennung von Modifikationen, sondern trägt auch dazu bei, das Vertrauen der Nutzer in die Zuverlässigkeit und Authentizität der Simulationsergebnisse zu stärken. Durch die Sicherstellung, dass alle Komponenten der FMU seit ihrer Erstellung unverändert bleiben, bietet dieses Verfahren eine robuste Basis für verlässliche Simulationen und Analysen.

Die Erfindung betrifft auch eine Functional Mock-up Unit, die mit einem zuvor beschriebenen Verfahren erhaltbar ist.

Vorzugsweise gilt dabei, dass der Integritätsprüfungs-Code einen Gültigkeitszeitraum umfasst und die Integritätsprüfung so ausgestaltet ist, dass auch geprüft wird, ob die Nutzung der FMU im Gültigkeitszeitraum liegt.

Ganz besonders bevorzugt umfasst der Integritätsprüfungs-Code eine Nutzerkennung und die Integritätsprüfung ist so ausgestaltet, dass auch geprüft wird, ob die Nutzung der FMU durch einen Nutzer mit einer solchen Nutzerkennung erfolgt, die der in dem Integritätsprüfungs-Code enthaltenen Nutzerkennung entspricht.

Vorzugsweise liegt die V-ECU in der FMU als ausführbare Binary-Datei vor und in der FMU ist ein Hash-Wert abgelegt, der sich bei der Erstellung der FMU mittels einer Berechnung auf Basis wenigstens eines Teils der Speichersegmente der Binary-Datei ergeben hat.

Schließlich betrifft die Erfindung auch eine Verwendung einer zuvor beschriebenen Functional Mock-up Unit derart, dass bei jedem Start auf einem FMI-Simulator auf der Grundlage des Integritätsprüfungs-Codes eine Integritätsprüfung durchgeführt wird, im Rahmen derer geprüft wird, ob die Version der FMU gegenüber der durch das Exportieren der V-ECU erzeugten Version der FMU unverändert ist, wobei die Integritätsprüfung so ausgestaltet wird, dass eine Berechnung des Hash-Werts auf Basis des bei der Erstellung der FMU verwendeten Teils der Speichersegmente der Binary-Datei erfolgt und der damit berechnete Hash-Wert mit dem in der FMU bei der Erstellung der FMU abgelegten Hash-Wert verglichen wird. Ein erfolgreicher Start der FMU erfolgt vorzugsweise nur dann, wenn der Test auf Basis des Hash-Wertes zu einem positiven Ergebnis geführt hat, der beim Start berechnete Hash-Wert also dem ursprünglichen Hash-Wert entspricht. Ansonsten ist kein erfolgreicher Start der FMU möglich und der Startprozess wird abgebrochen

Nachfolgend wir die Erfindung anhand eines bevorzugten Ausführungsbeispiels unter Bezugnahme auf die Zeichnungen weiter im Detail erläutert.

In den Zeichnungen zeigen
- Fig. 1: schematisch ein computerimplementiertes Verfahren zum Erstellen einer Functional Mock-up Unit (FMU) nach dem FMI-Standard ist gemäß einem bevorzugten Ausführungsbeispiel der Erfindung und
- Fig. 2: schematisch eine Integritätsprüfung gemäß einem bevorzugten Ausführungsbeispiel der Erfindung.

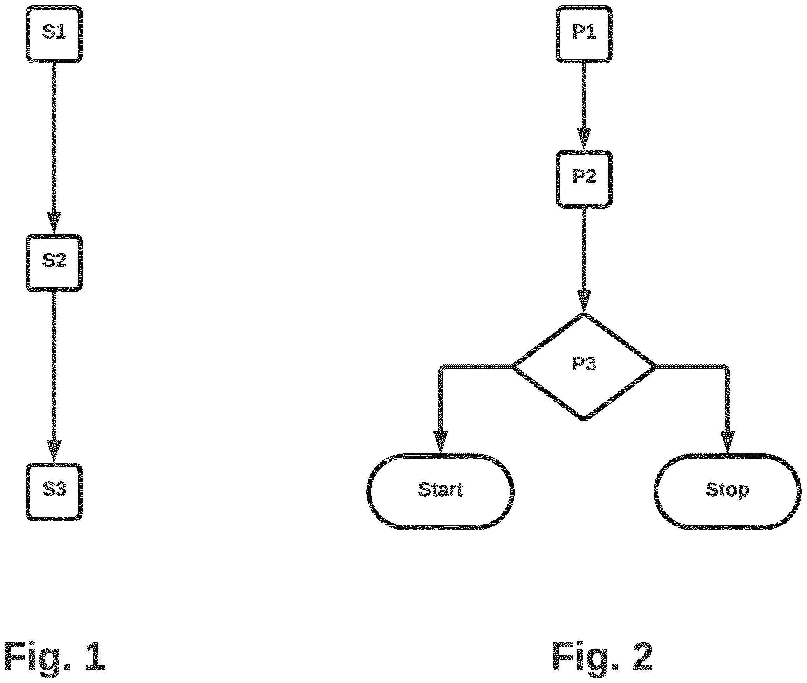

Wie schematisch in Fig. 1 dargestellt, ist gemäß einem bevorzugten Ausführungsbeispiel der Erfindung ein computerimplementiertes Verfahren zum Erstellen einer Functional Mock-up Unit (FMU) nach dem FMI-Standard vorgesehen, das die folgenden Verfahrensschritte aufweist:
In Schritt S1 wird eine V-ECU erstellt. Die Erstellung einer V-ECU beginnt dabei in der Regel mit der Definition seiner Funktionen und Anforderungen, basierend auf der realen ECU, die simuliert werden soll. Wichtige technische Daten und Kommunikationsprotokolle werden gesammelt und analysiert. Anschließend wird eine geeignete Software-Umgebung wie Simulink^{®} für die Modellierung ausgewählt. Das V-ECU wird programmiert, um das Verhalten des realen ECUs nachzubilden, einschließlich seiner Reaktionen auf Eingaben und Steuerbefehle.

Nachfolgend wird in Schritt S2 ein Integritätsprüfungs-Code erstellt. Dabei wird der Integritätsprüfungs-Code mit einem Gültigkeitszeitraum versehen und die Integritätsprüfung wird derart ausgestaltet, dass auch geprüft wird, ob die Nutzung der FMU im Gültigkeitszeitraum liegt. Darüber hinaus wird der Integritätsprüfungs-Code mit einer Nutzerkennung versehen und die Integritätsprüfung wird derart ausgestaltet, dass auch geprüft wird, ob die Nutzung der FMU durch einen Nutzer mit einer solchen Nutzerkennung erfolgt, die der in dem Integritätsprüfungs-Code enthaltenen Nutzerkennung entspricht.

Im folgenden Schritt S3 wird die V-ECU in eine FMU unter Hinzufügung des Integritätsprüfungs-Codes exportiert, so dass die erzeugte FMU bei jedem Start auf einem FMI-Simulator auf der Grundlage des Integritätsprüfungs-Codes eine Integritätsprüfung durchführt, im Rahmen derer geprüft wird, ob die Version der FMU gegenüber der durch das Exportieren der V-ECU erzeugten Version der FMU unverändert ist. Das Exportieren der V-ECU in die FMU erfolgt dabei als ausführbare Binary-Datei und ein Hash-Wert wird auf Basis der Speichersegmente der Binary-Datei berechnet und in einem separaten Speichersegment der FMU abgelegt.

Bei dem hier dargelegten Ausführungsbeispiel der Erfindung wird die eigentliche Integritätsprüfung durchgeführt, wie schematisch in Fig. 2 dargestellt, nämlich indem nach dem Start der FMU (Schritt P1) der Hash-Wert aus den Speichersegmenten der Binary-Datei in Schritt P2 berechnet und anschließend in Schritt P3 mit dem während der Erstellung in der Functional Mock-up Unit (FMU) gespeicherten Hash-Wert abgeglichen wird. Jedes Mal, wenn die FMU auf einem FMI-Simulator gestartet wird, erfolgt also eine Integritätskontrolle anhand des Integritätsprüfungs-Codes. Dabei wird überprüft, ob die Version der FMU identisch mit der Version ist, die durch das Exportieren der V-ECU erzeugt wurde. Diese Integritätsprüfung schließt die Berechnung des Hash-Werts basierend auf den Speichersegmenten der Binary-Datei ein, gefolgt von einem Vergleich dieses Hash-Werts mit dem bei der Erstellung der FMU hinterlegten Hash-Wert. Sind die Hash-Werte gleich, startet die FMU erfolgreich ("Start"), sind sie nicht gleich, wird der Start der FMU automatisch abgebrochen ("Stop").

Ein Anwendungsbeispiel für dieses Ausführungsbeispiel der Erfindung sei nachfolgend anhand der folgenden Situation erläutert:
Im vorliegenden Beispiel liefert ein Zulieferer eine FMU mit einer virtuellen elektronischen Steuereinheit (V-ECU/FMU) an einen OEM, der diese in virtuellen Tests verwenden möchte. Der Zulieferer hat zuvor alle Anforderungen, die der OEM im Lastenheft spezifiziert hat, erfüllt und setzt zur Sicherstellung der Integrität der V-ECU/FMU eine Integritätsprüfung gemäß dem zuvor beschriebenen bevorzugten Ausführungsbeispiel der Erfindung ein.

Während des Einsatzes der V-ECU/FMU versucht nun ein Mitarbeiter des OEM, die V-ECU/FMU zu manipulieren. Der Mitarbeiter bemerkt, dass gewisse Parameter einer Softwarekomponente innerhalb der V-ECU/FMU nicht kalibrierbar sind und passt daher eine DLL-Datei der FMU mittels eines HEX-Editors an. Sein Ziel ist es, eine weitere Abstimmungsrunde mit dem Zulieferer zu vermeiden und Zeit zu sparen. Diese unautorisierte Änderung beeinflusst jedoch unbewusst das Verhalten der V-ECU/FMU und könnte zu fehlerhaften Testergebnissen führen.

Wenn nun die manipulierte V-ECU/FMU in den FMU-Importer des OEM geladen wird, erkennt das Integritätsprüfungssystem die vorgenommenen Änderungen. Durch diese Erkennung wird die Ausführung der manipulierten V-ECU/FMU verhindert, wodurch auch falsche Testergebnisse und möglicherweise fehlerhafte Schlussfolgerungen ausgeschlossen werden. Dieses Sicherheitsfeature schützt nicht nur die Zuverlässigkeit der Tests, sondem auch den Zulieferer vor möglichen Regressansprüchen seitens des OEM, da die Integrität der gelieferten V-ECU/FMU gewährleistet und deren unveränderte Nutzung bestätigt wird. Die Integritätsprüfung fungiert somit als kritische Sicherheitsmaßnahme, die das Risiko von fehlerhaften Ergebnissen minimiert und die vertragliche Verantwortlichkeit des Zulieferers absichert.

## Patentansprüche

1. Computerimplementiertes Verfahren zum Erstellen einer Functional Mock-up Unit, FMU, nach dem FMI-Standard, mit folgenden Verfahrensschritten:
Erstellen einer V-ECU,
Erstellen von Integritätsprüfungs-Code und
Exportieren der V-ECU in eine FMU unter Hinzufügung des Integritätsprüfungs-Codes, so dass die erzeugte FMU bei jedem Start auf einem FMI-Simulator auf der Grundlage des Integritätsprüfungs-Codes eine Integritätsprüfung durchführt, im Rahmen derer geprüft wird, ob die Version der FMU gegenüber der durch das Exportieren der V-ECU erzeugten Version der FMU unverändert ist.

2. Computerimplementiertes Verfahren nach Anspruch 1, wobei der Integritätsprüfungs-Code einen Gültigkeitszeitraum umfasst und die Integritätsprüfung so ausgestaltet ist, dass auch geprüft wird, ob die Nutzung der FMU im Gültigkeitszeitraum liegt.

3. Computerimplementiertes Verfahren nach Anspruch 1 oder 2, wobei der Integritätsprüfungs-Code eine Nutzerkennung umfasst und die Integritätsprüfung so ausgestaltet ist, dass auch geprüft wird, ob die Nutzung der FMU durch einen Nutzer mit einer solchen Nutzerkennung erfolgt, die der in dem Integritätsprüfungs-Code enthaltenen Nutzerkennung entspricht.

4. Computerimplementiertes Verfahren nach einem der vorherigen Ansprüche, wobei das Exportieren der V-ECU in die FMU als ausführbare Binary-Datei erfolgt,
eine Berechnung eines Hash-Werts auf Basis wenigstens eines Teils der Speichersegmente der Binary-Datei erfolgt und
der berechnete Hash-Wert in der FMU abgelegt wird.

5. Computerimplementiertes Verfahren nach Anspruch 4, wobei der der berechnete Hash-Wert in einem separaten Speichersegment der FMU abgelegt wird.

6. Computerimplementiertes Verfahren nach Anspruch 4 oder 5, wobei die Integritätsprüfung so ausgestaltet wird, dass eine Berechnung des Hash-Werts auf Basis des bei der Erstellung der FMU verwendeten Teils der Speichersegmente der Binary-Datei erfolgt und der damit berechnete Hash-Wert mit dem in der FMU bei der Erstellung der FMU abgelegten Hash-Wert verglichen wird.

7. Functional Mock-up Unit, FMU, erhaltbar mit einem Verfahren nach Anspruch 1.

8. Functional Mock-up Unit nach Anspruch 7, wobei der Integritätsprüfungs-Code einen Gültigkeitszeitraum umfasst und die Integritätsprüfung so ausgestaltet ist, dass auch geprüft wird, ob die Nutzung der FMU im Gültigkeitszeitraum liegt.

9. Functional Mock-up Unit nach Anspruch 7 oder 8, wobei der Integritätsprüfungs-Code eine Nutzerkennung umfasst und die Integritätsprüfung so ausgestaltet ist, dass auch geprüft wird, ob die Nutzung der FMU durch einen Nutzer mit einer solchen Nutzerkennung erfolgt, die der in dem Integritätsprüfungs-Code enthaltenen Nutzerkennung entspricht.

10. Functional Mock-up Unit einem der Ansprüche 7 bis 9, wobei die V-ECU in der FMU als ausführbare Binary-Datei vorliegt und
ein Hash-Wert in der FMU abgelegt ist, der sich bei der Erstellung der FMU mittels einer Berechnung auf Basis wenigstens eines Teils der Speichersegmente der Binary-Datei ergeben hat.

11. Verwendung einer Functional Mock-up Unit nach Anspruch 10 derart, dass bei jedem Start auf einem FMI-Simulator auf der Grundlage des Integritätsprüfungs-Codes eine Integritätsprüfung durchgeführt wird, im Rahmen derer geprüft wird, ob die Version der FMU gegenüber der durch das Exportieren der V-ECU erzeugten Version der FMU unverändert ist, wobei die Integritätsprüfung so ausgestaltet wird, dass eine Berechnung des Hash-Werts auf Basis des bei der Erstellung der FMU verwendeten Teils der Speichersegmente der Binary-Datei erfolgt und der damit berechnete Hash-Wert mit dem in der FMU bei der Erstellung der FMU abgelegten Hash-Wert verglichen wird.
